# EUROPEAN PATENT SPECIFICATION

(11) **EP 3 220 028 B1**
(45) Date of publication and mention of the grant of the patent: **22.08.2018**
(21) Application number: 17160473.9
(22) Date of filing: 13.03.2017
(51) Int. Cl.: F16K 31/06

(54) **HYDRAULIC BRAKE**
HYDRAULISCHE BREMSE
FREIN HYDRAULIQUE

(30) Priority: 15.03.2016 IT UA20161689
(43) Date of publication of application: 20.09.2017
(73) Proprietor: MADAS S.r.l., 37048 San Pietro Di Legnago - Verona (IT)
(72) Inventor: Marangoni, Luigi, 37040 Terrazzo (VR) (IT)
(74) Representative: Fisauli, Beatrice A. M.

(56) References cited:
- DE-B- 1 173 301
- FR-A1- 2 650 362
- GB-A- 2 289 320

## Description

The present invention refers in general to a hydraulic brake, preferably for electro-valves but not limited to electro-valves. More particularly, the present invention refers to a hydraulic brake whose operating characteristics such as braking speed can be adjusted at will, according to the need of the user.

DE-117330-B discloses a hydraulic brake in the form of a shock absorber for a valve (see fig. 2), comprising:
- a jacket (7) in which a cylindrical chamber (6) filled with a fluid (see col. 3, line 50) is formed;
- a piston (4) received in the cylindrical chamber (6) so as to divide said cylindrical chamber into a first chamber and a second chamber (i.e. above and below piston 4).

FR-2650362-A1 and GB-2289320-A disclose similar dampeners for valves.

Hydraulic brakes comprising one or more adjustable valves for modifying the braking speed according to the need are known. Such devices comprise a piston that moves inside a cylinder filled with a fluid such as oil. The motion of the piston in one direction is contrasted by a spring and the piston divides the cylinder in two separated chambers so that the volume of these two chambers varies according to the position of the piston.

The passage of oil from a chamber to the other chamber can take place through one or more ducts having one or more valves that determine the flow of fluid between the two chambers.

The valves are adjustable so as to vary the flow velocity and, consequently, the displacement speed of the piston according to the different needs that may vary depending on users and over time.

A stem is fixed to the piston and one end of the stem is positioned outside the cylinder so as to use the force of deceleration of the brake itself.

For example, a hydraulic brake can be used to adjust the motion of the core of an electro-valve.

The known hydraulic brakes are, therefore, provided with valves that are capable of adjusting the flow of fluid depending on the required deceleration. However, the adjustment remains unchanged for the entire displacement of the piston in the cylinder.

The deceleration of the piston inside the cylinder is essentially due to the presence of a spring that acts in contrast with the piston.

Anyway, there may be auxiliary ducts that allow fluid to be displaced from a chamber to the other chamber within a particular interval of positions of the piston, so that the piston can move at different speeds depending on its position in the cylinder.

For example, a hydraulic brake can have, in addition to the conventional duct that brings the fluid from an end to the other end of the cylinder, also a further duct that exchanges the fluid between a first end and an intermediate zone of the cylinder. With this configuration, as long as the piston moves between the first end and the intermediate zone, for example at half height, the speed of the piston is greater with respect to the displacement from the intermediate zone to the opposite end since in the first phase of displacement, the flow of fluid exchanged is greater with respect to the second phase.

Thus, the presence of one or more further ducts allows to obtain a stroke of the piston with different speeds depending on the position of the piston in the cylinder.

A problem of the hydraulic brakes of this type is an insufficient flexibility.

In other words, the hydraulic brakes of known type have rather rigid settings; it is possible to vary the flow of fluid inside a duct by acting on the corresponding valve.

However, it is not possible to modify the length of the zones at different speed because the connections of the ducts of exchange with the cylinder are fixed and cannot be modified.

An aim of the invention is to remove the above-mentioned drawbacks and still others by realizing a hydraulic brake that is flexible and capable of adapting to the needs of the users.

Another aim of the invention is to provide a hydraulic brake that allows to modify the speed of the piston, in particular that allows to modify the length of the piston stroke with different speeds.

The above aims and other aims are achieved according to the invention by a hydraulic brake, preferably for electro-valves but not limited to electro-valves, comprising a jacket and a piston. A cylindrical chamber filled with a fluid is formed in the jacket. The piston is received in the cylindrical chamber so as to divide said cylindrical chamber into a first chamber and a second chamber. The hydraulic brake is characterized by the fact that a cylindrical hole is formed into the jacket and has an axis parallel to the axis of the cylindrical chamber, between the cylindrical hole and the cylindrical chamber. A slot is formed into the jacket to enable the communication between the cylindrical hole and the cylindrical chamber.

A pivot of shape and dimensions homologous to the cylindrical hole is received in the cylindrical hole and is rotatable in the cylindrical hole.

Besides, a groove of helical shape is formed on the lateral surface of the pivot, said groove being developed according to an angular range lower than 360°, so that the groove is put in communication with the cylindrical chamber through an exchange portion defined by the intersection of the groove with the slot.

The groove is put in communication with the cylindrical chamber also through an exchange passage, so that the groove communicates with the cylindrical chamber at two different heights through the exchange portion of the groove and the exchange passage.

The stroke of the piston has, therefore, a variable speed depending on whether its position is at a height included between the height of the exchange portion and the height of the exchange passage, or is at a height not included in the aforesaid heights. In the first hypothesis, the piston can move at a greater speed than the second hypothesis.

In particular, through the helical conformation of the groove and through the possibility of rotating the pivot, it is possible to vary the height of the exchange portion by modifying thus the length of the interval in which the stroke of the piston is faster.

Advantageously, the distance between the axis of the cylindrical hole and the axis of the cylindrical chamber is smaller than the sum of the respective radii, so that the cylindrical hole and the cylindrical chamber intersect defining the slot. In this way, the cylindrical hole and the cylindrical chamber are perfectly contiguous and any unwanted fluid drawings are reduced.

Besides, the pivot may include a head with a linear seat directed toward the outside of the jacket so that by using a screwdriver engaging the linear seat of the head it is possible to rotate the pivot.

Advantageously, the piston may be fixed to a rod whose free end is disposed outside of the cylindrical chamber and is adapted to be displaced by a mobile core of an electromagnet, attracted by a fixed core. Thus, the hydraulic brake according to the invention may be used in an electro-valve.

Besides, by varying the length of the rod, it is possible to use the hydraulic brake for electro-valves of different diameters.

The position of the fixed core may be adjustable relative to the jacket and the cylindrical chamber so as to modify the stroke of the piston.

A contrast spring may be received in the first chamber and is adapted to contrast the movement of the piston pressing the contrast spring.

Advantageously, at least one discharge channel may be formed in the piston and is adapted to enable the fluid flow from the second chamber to the first chamber especially when the piston, pushed by the contrast spring, has to quickly return to the idle position.

Besides, the hydraulic brake according to the invention may comprise a regulation valve adapted to enable a fluid flow from the first chamber to the second chamber; in particular, the regulation valve may comprise means of regulation of the flow so as to vary the flow rate of the fluid flowing from the first chamber to the second chamber according to the requirements.

At least one expansion vessel of variable volume may be formed in the cylindrical chamber to compensate for any change in volume of the fluid in the cylindrical chamber, caused by a change in temperature or pressure or caused by a different diameter of the rod inside the cylindrical chamber.

In particular, the expansion vessel may comprise an expansion chamber which is directed toward the cylindrical chamber and in which a mobile piston is received. An elastic contrast means may be inserted between the mobile piston and the bottom of the expansion chamber so as to modify the position of the mobile piston depending on the increase or decrease of the volume of fluid.

Further features and details of the invention will be better understood from the following specification which is provided by way of a non-limiting example, as well as from the annexed drawing, wherein:
Figure 1 is a side view in section of a hydraulic brake according to the invention, connected to an electro-valve;
Figure 2 is a side view in section of a detail of the hydraulic brake in Figure 1;
Figure 3 is a top view of the detail in Figure 2.

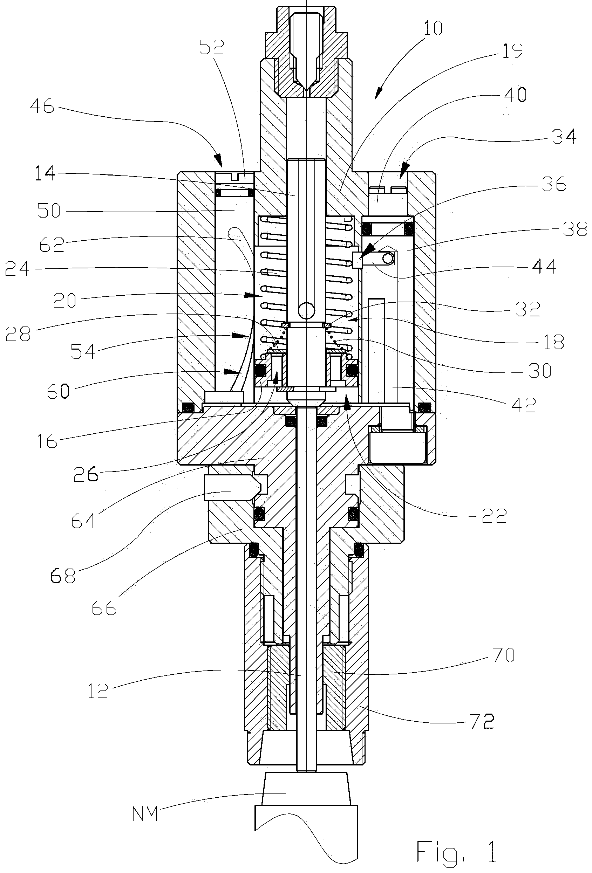

With reference to the annexed drawings, in particular to Figure 1, number 10 denotes a hydraulic brake comprising a rod 12 on which the movable core NM of an electro-valve may abut.

A stem 14 is fixed to the rod 12. A piston 16 in turn is joined firmly to the stem 14. The piston 16 can move inside a cylindrical chamber 18 formed into a jacket 19.

In particular, the piston 16 divides the cylindrical chamber 18 into two different portions, namely a first chamber 20 and a second chamber 22.

A contrast spring 24 is received in the first chamber 20. An end of the contrast spring 20 abuts against a bottom of the cylindrical chamber 18 and the other end of the contrast spring 20 abuts against the piston 16.

Discharge ducts 26 are formed in the piston 16 but only one of them is indicated in Figure 1.

The discharge ducts are open towards the second chamber 22 and are closed, not permanently, by a washer 28 towards the first chamber 20.

The washer 28 abuts against the piston 16 by means of an abutting spring 30 which is blocked, at an end, by a ring 32 which is constrained in a stable manner to the stem 14.

A cylindrical seat is formed in the jacket 19 and a regulation valve 34 is received in said cylindrical seat.

The cylindrical seat is separated from the cylindrical chamber 18. However, the cylindrical seat communicates with the cylindrical chamber 18 through a lower opening, not visible in Figure 1, and an upper opening 36.

The lower opening is arranged in the lower part of the jacket 19; in other words, the lower opening puts the cylindrical seat in communication with the second chamber 22.

The upper opening 36 puts the cylindrical seat in communication with the first chamber 20, as shown in Figure 1.

The regulation valve 34 includes a first cylindrical pivot 38 that can rotate inside the cylindrical seat by acting on a cut made on a head 40 of the same first pivot 38.

A central duct 42 is formed in the first pivot 38 and extends in height and is connected in the lower part through a passage recess with the lower opening, and in the upper part through a hollow 44 with the upper opening.

Through this configuration, the first chamber 20 communicates with the second chamber 22 through, in succession, the upper opening 36, the hollow 44, the central duct 42, the passage recess and the lower opening.

The depth of the recess 44 varies radially. In this way, according to the radial position of the first pivot 38, the light of the passage from the central duct 42 to the upper opening 36 varies.

Consequently, also the flow of the fluid that passes through the regulation valve 34 may vary according to the radial position of the same valve 34. This position may be modified by acting on the head 40 of the first pivot 38.

The regulation of the fluid flow through the regulation valve 34 allows to vary the stroke speed of the piston 16 inside the cylindrical chamber 18 along the whole stroke of the piston 16.

Indeed, when the rod 12 pushes the stem 14, the piston 16 fixed to the stem 14 is forced to move upwards in the chamber 18, contrasted by the contrast spring 24.

The movement of the piston 16 forces the fluid in the first chamber 20 to pass through the regulation valve 34 to the second chamber 22.

In essence, the speed of the piston 16 upwards varies as a function of the elasticity of the contrast spring 24 and the adjustment of the valve 34.

When the piston 16 can return to its initial position since there is no longer any force acting on the rod 12, the contrast spring 24 pushes the piston downwards and the fluid passes from the second chamber 22 to the first chamber 20 through the discharge channels 26, by pushing the washer 28 upwards, having a force greater than that exerted by the abutment spring 30. Besides, the fluid can pass through the regulation valve 34 in the opposite direction to the previously described direction unless there is a non-return device.

A cylindrical hole is formed in the jacket 19 and a regulation valve 46 for the brake is received in said cylindrical hole.

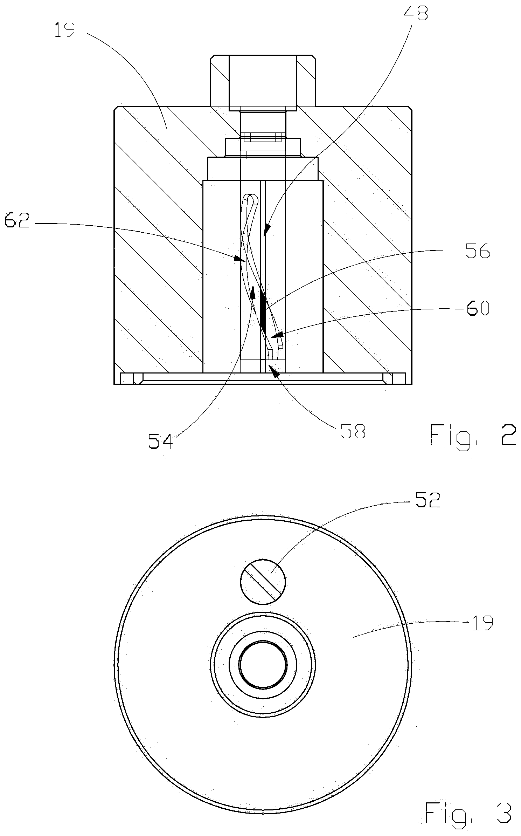

The cylindrical hole is formed at a side of the cylindrical chamber 18 and communicates with the cylindrical chamber 18 through a vertical slot 48 visible in Figure 2. In essence, the two cylinders identified by the cylindrical hole and the cylindrical chamber, respectively, are parallel to each other and the distance between their axes is slightly less than the sum of their radii, so that the same two cylinders intersect.

The vertical segments delimiting the intersection portion of the two cylinders correspond to the lateral edges of the slot 48.

The valve 46 for the adjustment of the brake comprises a pivot 50 which is completely included in the cylindrical hole and has a head 52 which has a cut and is directed outwards so as to rotate the pivot 50.

A groove 54 of helical development is formed in the pivot 50 and intersects the slot 48 identifying an exchange portion 56.

The helical groove 54 is communicating, in the lower part, with a passage area 58 formed in the lower part in the pivot 50 and communicating with the second chamber 22 of the cylindrical chamber 18.

The exchange portion 56 divides the groove 54 into a passage portion 60 arranged between the exchange portion 56 and the passage area 58, and a blind portion 62 which is the end portion, arranged above the exchange portion 56.

Indeed, the passage portion 60 of the helical groove 54 acts as a further conduit between the first chamber 20 and the second chamber 22 in both directions of the fluid flow as long as the exchange portion 56 is positioned in correspondence of the first chamber 20.

When the piston 16 has overcome in height the exchange portion 56, the fluid does not flow between the two chambers 20, 22 any longer, apart the fluid obtained by means of the regulation valve 34, as previously described. Consequently, in the first part of the stroke of the piston 16 there is a greater passage of fluid between the two chambers 20, 22, which makes faster the stroke of the piston 16.

The particularity of the configuration of the valve that regulates the brake consists in the possibility of varying the height of the exchange portion 56 by rotating the pivot 50 so as to modify the length of the piston stroke at a higher speed and to modify the length of the stroke at a lower speed.

Besides, an expansion vessel is formed in the jacket 19 and communicates with the cylindrical chamber 18 in order to compensate for the variation in volume of the cylindrical chamber 18 for the entry of the rod 12 in the same cylindrical chamber 18. In fact, the rod 12 may have a diameter different from the diameter of the stem 14.

In addition, also another expansion vessel may be formed in the jacket 19 to compensate for the variations in volume of the fluid, caused by the variations of temperature and pressure.

The jacket 19 is closed in the lower part by a closing body 64 which is centrally hollow so as to be traversed by the rod 12.

The closing body 64 is received in a cup-shaped body 66 so as to rotate relatively. The closing body 64 and the cup-shaped body 66 are connected to each other through a grain 68.

A fixed core 70 is engaged at the end of the closing body 64 and is shaped internally homologous to the end of the closing body. More precisely, both have a hexagonal section.

The fixed core 70 is threaded externally and is screwed into a covering cylinder 72 which is screwed and fixed to the cup-shaped body 66.

Through this conformation, by loosening the grain 68, it is possible to rotate the closing body 64 and, consequently, the entire brake, relative to the cup-shaped body 66 and the covering cylinder 72.

Through said rotation, the fixed core 70 moves relative to the covering cylinder 72 so as to vary the total stroke of the movable core NM of the electro-valve.

The particular conformation of the brake 10 according to the invention allows to use rods having a rather small diameter in order to allow operation at both high and low pressures.

Besides, the conformation of the closing body 64 and the possibility of engaging the rod 12 on the stem 14 internal to the cylindrical chamber 18 allow to use the brake for electro-valves of different diameters because it is sufficient to replace the rod 12 with a rod of a different length, leaving all the other components unaltered.

A technician of this sector may provide changes or variants to be considered as included in the scope of protection of the present invention. For example, the brake 10 can include other regulation valves operating according different mechanisms.

## Claims

1. Hydraulic brake (10) comprising:
- a jacket (19) in which a cylindrical chamber (18) filled with a fluid is formed;
- a piston (16) received in the cylindrical chamber (18) so as to divide said cylindrical chamber (18) into a first chamber (20) and a second chamber (22);
**characterized by the fact that**
a cylindrical hole is formed into the jacket (19) and has an axis parallel to the axis of the cylindrical chamber (18), a slot (48) being formed between the cylindrical hole and the cylindrical chamber (18) to enable the communication between the cylindrical hole and the cylindrical chamber (18),
a pivot (50) of shape and dimensions homologous to the cylindrical hole being received in the cylindrical hole and being rotatable in the cylindrical hole, a groove (54) of helical shape being formed on the lateral surface of the pivot (50), said groove (54) being developed according to an angular range lower than 360°, so that the groove (54) is put into communication with the cylindrical chamber (18) through an exchange portion (56) defined by the intersection of the groove (54) with the slot (48),
said groove (54) being put into communication with the cylindrical chamber (18) also through an exchange passage, so that the groove (54) communicates with the cylindrical chamber (18) at two different heights through the exchange portion (56) of the groove and the exchange passage.

2. Hydraulic brake (10) according to the preceding claim, wherein the distance between the axis of the cylindrical hole and the axis of the cylindrical chamber (18) is smaller than the sum of the respective radii so that the cylindrical hole and the cylindrical chamber (18) intersect defining the slot (18).

3. Hydraulic brake (10) according to one of the preceding claims, wherein the pivot (50) includes a head (52) with a linear seat directed toward the outside of the jacket (19) so as to rotate the pivot (50) by using a screwdriver engaging the linear seat of the head (52).

4. Hydraulic brake (10) according to one of the preceding claims, wherein the piston (16) is fixed to a rod (12) whose free end is disposed outside of the cylindrical chamber (18) and is adapted to be displaced by a mobile core of an electromagnet, attracted by a fixed core (70).

5. Hydraulic brake (10) according to the preceding claim, wherein the position of the fixed core (70) is adjustable relative to the jacket (19) and the cylindrical chamber (18).

6. Hydraulic brake (10) according to one of the preceding claims, wherein a contrast spring (24) is received in the first chamber (20) and is adapted to contrast the movement of the piston (16) pressing on the contrast spring (24).

7. Hydraulic brake (10) according to one of the preceding claims, wherein at least one discharge channel (26) is formed in the piston (16) and is adapted to enable the fluid flow from the second chamber (22) to the first chamber (20).

8. Hydraulic brake (10) according to one of the preceding claims, wherein a regulation valve (34) is comprised and is adapted to enable a fluid flow from the first chamber (20) to the second chamber (22), said valve (34) comprising means of regulation of the flow so as to vary the flow rate of the fluid flowing from the first chamber (20) to the second chamber (22).

9. Hydraulic brake (10) according to one of the preceding claims, wherein at least one expansion vessel of variable volume is formed in the cylindrical chamber (19).

10. Hydraulic brake (10) according to the preceding claim, wherein the expansion vessel comprises an expansion chamber directed toward the cylindrical chamber (18) and in which a mobile piston is received, an elastic contrast means being received between the mobile piston and the bottom of the expansion chamber.

## Patentansprüche

1. Hydraulische Bremse (10) umfassend:
- einen Mantel (19), in dem eine zylindrische Kammer (18) vorgesehen ist, die mit einer Flüssigkeit gefüllt ist;
- einen Kolben (16), der in der zylindrischen Kammer (18) derart aufgenommen ist, dass er die genannte zylindrische Kammer (18) in eine erste Kammer (20) und in eine zweite Kammer (22) aufteilt;
**dadurch gekennzeichnet, dass**
im Mantel (19) wird eine zylindrische Bohrung mit einer zur Achse der zylindrischen Kammer (18) parallelen Achse, zwischen dem zylindrischen Loch und der zylindrischen Kammer (18) vorgesehen, wobei ein Schlitz (48) gebildet wird, durch den die zylindrische Bohrung und die zylindrische Kammer (18) kommunizieren,
wobei in der zylindrischen Bohrung ein Zapfen (50) aufgenommen ist, dessen Gestalt und Abmessungen ähnlich zur zylindrischen Bohrung sind, wobei der Zapfen (50) in der zylindrischen Bohrung drehbar ist, wobei eine Nut (54) mit einer schraubenförmigen Gestalt auf der seitlichen Oberfläche des Zapfens (50) vorgesehen ist, wobei die besagte Nut (54) sich über einen Winkelbereich kleiner als 360° derart erstreckt, dass die Nut (54) mit der zylindrischen Kammer (18) durch einen Austauschabschnitt (56) kommuniziert, der durch den Schnittpunkt der Nut (54) mit dem Schlitz definiert ist, wobei die gesagte Nut (54) mit der zylindrischen Kammer (18) auch durch einen Austauschdurchlass derart kommuniziert, dass die Nut (54) mit der zylindrischen Kammer (18) durch zwei verschiedenen Höhen durch den Austauschausschnitt der Nut (54) und den Austauschdurchgang kommuniziert.

2. Hydraulische Bremse (10) nach dem vorhergehenden Anspruch, wobei der Abstand zwischen der Achse der zylindrischen Bohrung und der Achse der zylindrischen Kammer (18) geringer als die Summe der jeweiligen Radien derart geringer ist, dass sich die zylindrische Bohrung und die zylindrische Kammer (18) sich derart schneiden, dass sie den Schlitz (18) definieren.

3. Hydraulische Bremse (10) nach einem der vorhergehenden Ansprüche, wobei der Zapfen (50) einen Kopf (52) mit einem linearen Sitz aufweist, der der Außenseite des Mantels (19) derart zugewandt ist, dass er den Zapfen (50) drehen kann, wobei er mit einem Schraubendreher zusammenwirkt, der in der linearen Aufnahme (52) des Kopfes (52) eingesteckt wird.

4. Hydraulische Bremse (10) nach einem der vorhergehenden Ansprüche, wobei der Kolben (16) an einer Stange (12) mit eine freien Ende befestigt ist, das außerhalb der zylindrischen Kammer (18) angeordnet und geeignet ist, durch einen beweglichen Kern eines Elektromagneten bewegt zu werden, der von einem festen Kern (70) angezogen wird.

5. Hydraulische Bremse (10) nach dem vorhergehenden Anspruch, wobei die Lage des festen Kerns (70) in Bezug auf den Mantel (19) und die zylindrische Kammer (18), einstellbar ist.

6. Hydraulische Bremse (10) nach einem der vorhergehenden Ansprüche, wobei in der ersten Kammer (20) eine Kontrastfeder (24) aufgenommen ist, die geeignet ist, der Bewegung des Kolbens (16) mit Druck auf die Kontrastfeder (24) entgegenzuwirken.

7. Hydraulische Bremse (10) nach einem der vorhergehenden Ansprüche, wobei im Kolben (16) mindestens ein Ablaufkanal (26) vorgesehen ist, der geeignet ist, den Fluss einer Flüssigkeit von der zweiten Kammer (22) zu der ersten Kammer (20) zu gestatten.

8. Hydraulische Bremse (10) nach einem der vorhergehenden Ansprüche, wobei ein Einstellventil (34) vorgesehen ist, das geeignet ist, den Fluss einer Flüssigkeit von der ersten Kammer (20) zu der zweiten Kammer (22) zu gestatten, wobei das besagte Ventil (34) Strömungsregulierungsmittel aufweist, die die Geschwindigkeit des Flusses der Flüssigkeit von der ersten Kammer (20) zur zweiten Kammer (22) verändern zu können.

9. Hydraulische Bremse (10) nach einem der vorhergehenden Ansprüche, wobei in der zylindrischen Kammer (19) wenigstens ein Ausdehnungsgefäß mit variablem Volumen vorgesehen ist.

10. Hydraulische Bremse (10) nach dem vorhergehenden Anspruch, wobei das Ausdehnungsgefäß eine Ausdehnungskammer umfasst, die der zylindrischen Kammer (18) zugewandt ist und in der ein beweglicher Kolben untergebracht ist, wobei ein elastisches Kontrastmittel zwischen dem beweglichen Kolben und dem Boden der Expansionskammer aufgenommen wird.

## Revendications

1. Frein hydraulique (10) comprenant:
- une chemise (19) dans laquelle est obtenue une chambre cylindrique (18) remplie d'un fluide;
- un piston (16) logé dans la chambre cylindrique (18) de manière à diviser ladite chambre cylindrique (18) en une première chambre (20) et une deuxième chambre (22);
**caractérisé en ce que**
dans la chemise (19) un trou cylindrique est obtenu avec l'axe parallèle à l'axe de la chambre cylindrique (18), entre le trou cylindrique et la chambre cylindrique (18) une fente (48) étant formée, à travers laquelle le trou cylindrique et la chambre cylindrique (18) communiquent,
dans le trou cylindrique étant obtenu un pivot (50) de forme et de dimensions homologues au trou cylindrique, le pivot (50) pouvant tourner dans le trou cylindrique, une rainure (54) de forme hélicoïdale étant obtenue sur la surface latérale du pivot (50), ladite rainure (54) se développant sur un intervalle angulaire inférieur à 360°, de sorte que la rainure (54) est mise en communication avec la chambre cylindrique (18) par une partie d'échange (56) définie par l'intersection de la rainure (54) avec la fente (48) ,
ladite rainure (54) étant mise en communication avec la chambre cylindrique (18) également à travers un passage d'échange, de sorte que la rainure (54) communique avec la chambre cylindrique (18) à deux hauteurs distinctes à travers la partie d'échange (56) de la rainure et le passage d'échange.

2. Frein hydraulique (10) selon la revendication précédente, dans lequel la distance entre l'axe du trou cylindrique et l'axe de la chambre cylindrique (18) est inférieure à la somme des rayons respectifs, de sorte que le trou cylindrique et la chambre cylindrique (18) se croisent définissant la fente (18).

3. Frein hydraulique (10) selon l'une des revendications précédentes, dans lequel le pivot (50) comporte une tête (52) avec un siège linéaire tourné vers l'extérieur de la chemise (19), de manière à pouvoir faire tourner le pivot (50) en agissant sur un tournevis inséré dans le siège linéaire de la tête (52).

4. Frein hydraulique (10) selon l'une des revendications précédentes, dans lequel le piston (16) est fixé à une tige (12) avec une extrémité libre disposée à l'extérieur de la chambre cylindrique (18) et apte à être déplacée par un noyau mobile d'un électroaimant attiré par un noyau fixe (70).

5. Frein hydraulique (10) selon la revendication précédente, dans lequel la position du noyau fixe (70) par rapport à la chemise (19) et à la chambre cylindrique (18) est réglable.

6. Frein hydraulique (10) selon l'une des revendications précédentes, dans lequel dans la première chambre (20) est logé un ressort de contraste (24) pour contrecarrer le mouvement du piston (16) sous pression sur le ressort de contraste (24).

7. Frein hydraulique (10) selon l'une des revendications précédentes, dans lequel au moins un canal d'évacuation (26) est prévu dans le piston (16) pour permettre l'écoulement d'un flux du fluide de la deuxième chambre (22) à la première chambre (20).

8. Frein hydraulique (10) selon l'une des revendications précédentes, comprenant une soupape de régulation (34) apte à permettre l'écoulement du flux de fluide de la première chambre (20) à la deuxième chambre (22), ladite soupape (34) comprenant des moyens de réglage du débit de manière à faire varier la vitesse du flux de fluide de la première chambre (20) à la deuxième chambre (22).

9. Frein hydraulique (10) selon l'une des revendications précédentes, dans lequel au moins un vase d'expansion à volume variable est réalisé dans la chambre cylindrique (19).

10. Frein hydraulique (10) selon la revendication précédente, dans lequel le vase d'expansion comprend une chambre d'expansion faisant face à la chambre cylindrique (18) et dans lequel est logé un piston mobile, un moyen de contraste élastique étant logé entre le piston mobile et le fond de la chambre d'expansion.
